**Europäisches Patentamt**

**European Patent Office**

**Office européen des brevets**

(19)

(11) **EP 1 411 613 A1**

(12) **EUROPEAN PATENT APPLICATION**

(43) Date of publication:
**21.04.2004 Bulletin 2004/17**

(51) Int Cl.$^7$: **H02J 3/00**

(21) Application number: **02405878.6**

(22) Date of filing: **14.10.2002**

| | |
|---|---|
| (84) Designated Contracting States:<br>**AT BE BG CH CY CZ DE DK EE ES FI FR GB GR**<br>**IE IT LI LU MC NL PT SE SK TR**<br>Designated Extension States:<br>**AL LT LV MK RO SI**<br><br>(71) Applicant: **ABB RESEARCH LTD.**<br>**8050 Zürich (CH)**<br><br>(72) Inventors:<br>• **Rehtanz, Christian**<br>**5405 Baden-Dättwil (CH)** | • **Westermann, Dirk**<br>**8050 Zürich (CH)**<br><br>(74) Representative: **ABB Patent Attorneys**<br>**c/o ABB Schweiz AG,**<br>**Intellectual Property (CH-LC/IP),**<br>**Brown Boveri Strasse 6**<br>**5400 Baden (CH)** |

(54) **Simulation of an electrical power transmission network**

(57)    In a method, computer program and data processing system for simulating an electrical power transmission network, a representation of the transmission network represents a power transmission section of the network linking a pair of buses, an internal network section (1) connected to said pair of buses and an external network section (2) comprising at least one adjoining network that is connected to the internal network section (1). A composite network section that comprises both the external and the internal network section is represented by a Ward equivalent circuit (6).

That is, the entirety of the network, with the exception of a transmission section, is represented by a basic or extended Ward equivalent circuit. The data required to represent the network is drastically reduced. Planning procedures using the network model are simplified and accelerated.

$P_1=0$
$U_1=U_3$
**PV1**

$P_2=0$
$U_2=U_4$
**PV2**

4

$\underline{Y}_{13}=jB_{13}$

$\underline{Y}_{24}=jB_{24}$

5

6

3

**PQ3** $P_3, Q_3$

**PQ4** $P_4, Q_4$

$\underline{Z}_{34}=R_{34}+jX_{34}$

$\underline{Y}_{30}=G_{30}+jwC_{30}$

$\underline{Y}_{40}=G_{40}+jwC_{40}$

**Fig. 2**

EP 1 411 613 A1

## Description

Field of the Invention

The invention relates to modelling and simulation for the design of large-scale electric power transmission networks, and in particular to a method, computer program and data processing system for simulating an electrical power transmission network as described in the preamble of claim 1, 9 and 10, respectively.

Background of the Invention

Electric power transmission and distribution systems or networks comprise high-voltage tie lines for connecting geographically separated regions, and substations for transforming voltages and for switching connections between lines. When planning or designing a network or an extension of a network, mathematical representations or models of the electrical behaviour of the network are created and analyzed. For example, when a new interconnection between two points of a power system consisting of line elements, transformers, substations, compensation or controllable devices is planned, standard load flow calculations are performed. The models on which such calculations are based require the exchange of a large amount of data between the network description and the calculation software. If the network owner is not identical to the company performing the analysis, then the data exchange may be subject to security and confidentiality constraints.

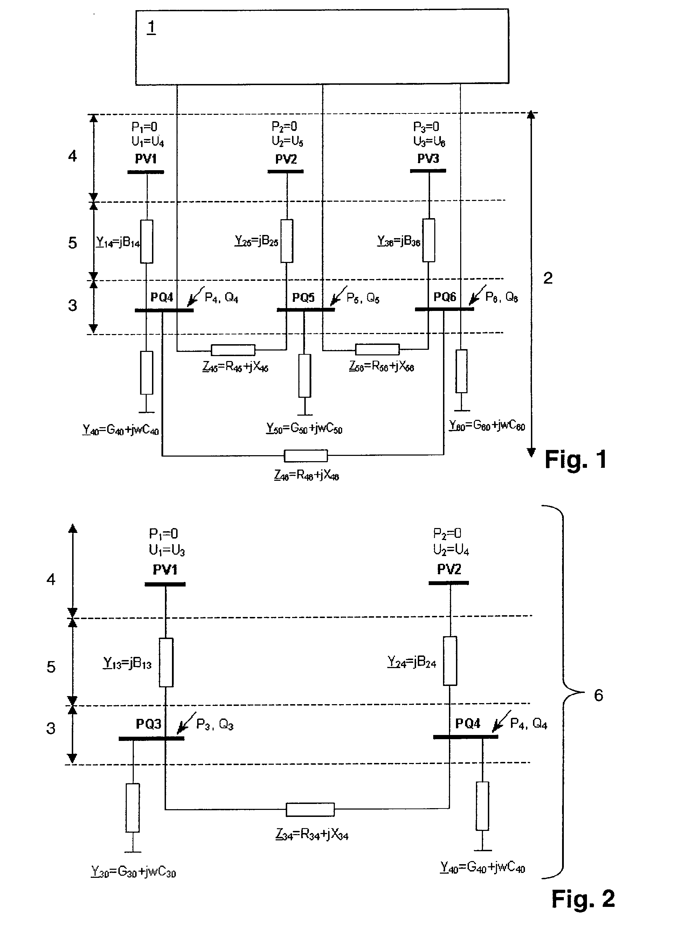

It is desirable to provide means for a basic design that gives an estimation of a technical solution to a problem involving an extension of modification of a transmission system, where there is no need for an extensive data exchange. That is, planning should work with only a reduced network model, which however should be as accurate as possible. Network reduction methods according to the state of the art simplify fringe parts of the network, which are of minor importance. For example, outgoing lines are modelled as load impedances or as constant power flows. More accurate models are the Ward and extended Ward models as presented in J. B. Ward, "Equivalent circuits for power flow studies", *AIEE Trans. PowerApp. Syst*., Vol. 68, pp. 373-382, 1949, and in S. Deckmann, A. Pizzolante, A. Monticelli, B. Stott, O. Alsac, "Studies on power system load flow equivalencing", *IEEE Trans. on Power App. and Syst*., Vol. PAS-99, No. 6, Nov./Dec. 1980, pp. 2301-2310. The Ward models separate a power network or power system into an internal and an external section as shown in Figure 1. A reduced model 2 represents the external network section. Boundary buses 3 linking the internal and external section are chosen such that the internal system is represented by a complete model 1 showing the behaviour of the power system that is relevant for the planning process. Such a complete internal model 1 typically comprises a significant number of buses, power lines, generators, loads and passive and active compensation devices. The number of these elements ranges from 10, typically more than 100, to 10000 each, depending on the degree of detail of the representation and on the voltage level of the network. Compensation devices are e.g. capacitor banks, inductances, SCV (static VAR compensator) and FACTS (flexible AC transmission system) devices.

The part of the network being studied, e.g. one or more transmission lines to be added or modified, is embedded within the internal system. The external system comprises elements having a small or no effect on the system part being studied. A Ward model or an extended Ward model represents the external system. In the remainder of this application, the term "basic Ward model" designates a non-extended Ward model, whereas "Ward model" or "Ward equivalent circuit" designates both basic and extended Ward model.

Figure 1 shows the extended Ward model 2. The basic Ward model comprises the impedances $Z_{45}$, $Z_{56}$, $Z_{46}$ and admittances $Y_{40}$, $Y_{50}$, $Y_{60}$. The extensions from basic Ward to extended Ward are fictitious generator buses 4 labelled PV1, PV2 and PV3 with associated admittances 5 labelled $Y_{14}$, $Y_{25}$, $Y_{36}$. In the basic Ward case these buses 4 and impedances 5 are omitted. With either one of the Ward models, the behaviour of the external system is modelled with respect to power flow and voltage as they affect the internal network 1 through the boundary buses 3, labelled PQ4, PQ5, PQ6. The number of boundary buses 3 and corresponding impedances etc. may be of course larger that shown in figure 1.

For the planning procedure mentioned above, this kind of network reduction reduces the data exchange, but it is still necessary to exchange original network data representing the internal network. On the one hand, this involves a considerable effort for extracting the network data from the network owner's database and for creating the internal model in the design environment. On the other hand, the network owner may be reluctant to share his network data with other parties.

Description of the Invention

It is therefore an object of the invention to create a method, computer program and data processing system for simulating an electrical power transmission network of the type mentioned initially, which reduces the amount of data required to represent the network.

These objects are achieved by a method, computer program and data processing system for simulating an electrical power transmission network according to the claims 1, 9 and 10.

According to the invention, a representation of the transmission network represents a power transmission section of the network linking a pair of buses, an internal network section connected to said pair of buses and an external network section comprising at least one adjoining network that is connected to the internal network section, wherein a composite network section that comprises both the external and the internal network section is represented by a Ward equivalent circuit.

That is, the entirety of the network, with the exception of a transmission section, is represented by a basic or extended Ward equivalent circuit. The data required to represent the network is drastically reduced. Planning procedures using the network model are simplified and accelerated.

In a preferred variant of the invention, the data required to represent the composite network is acquired through a user interface, preferably a web-based user interface. This is only sensible since the amount of data to be entered is small. It allows an equipment provider to offer the interface for inputting the parameters representing the network to a network owner. The equipment provider can then analyse the composite network in conjunction with a transmission line to be designed and determine a preliminary design for the transmission line, the design comprising transmission equipment and/or compensation devices that satisfy predetermined criteria.

The computer program for simulating an electrical power transmission network maintains a representation of the network, where said representation represents a power transmission section of the network linking a pair of buses, an internal network section connected to said pair of buses and an external network section comprising at least one adjoining network that is connected to the internal network section, wherein a composite network section that comprises both the external and the internal network section is represented by a Ward equivalent circuit.

The computer program according to the invention is loadable into an internal memory of a digital computer, and comprises computer program code means to make, when said computer program code means is loaded in the computer, the computer executes the method according to the invention. In a preferred embodiment of the invention, a computer program product comprises a computer readable medium, having the computer program code means recorded thereon.

A data processing system for simulating an electrical power transmission network according to the invention comprises means for carrying out the steps of the method according to the invention. In a preferred embodiment of the invention, the data processing system is an apparatus comprising a data processor, a memory coupled to the processor and computer program code means stored in said memory, where said computer program code means, when executed by the processor, causes the method according to the invention to be executed.

Further preferred embodiments are evident from the dependent patent claims.

Brief Description of the Drawings

The subject matter of the invention will be explained in more detail in the following text with reference to preferred exemplary embodiments that are illustrated in the attached drawings, in which:

Figure 1    shows a network model structure according to the state of the art;
Figure 2    shows a model structure of a composite network section according to the invention; and
Figure 3    shows an application of the composite network model structure in conjunction with a transmission line model.

The reference symbols used in the drawings, and their meanings, are listed in summary form in the list of reference symbols. In principle, identical parts are provided with the same reference symbols in the figures.

Detailed Description of Preferred Embodiments

The idea of the invention is to apply the known Ward or the extended Ward reduction such that an equivalent remains that represents the entire power network with the exception of one transmission section that is to be studied. The transmission section to be studied is either an existing transmission line or transmission corridor, which has to modified due to changing requirements, or a new line or corridor that must be designed in its entirety. Expressed in terms of the state of the art, in which a complicated internal model and a reduced external model representing adjoining network parts are used, according to the invention both the external and the internal network are completely eliminated. Only two buses of the entire network remain. These two buses are boundary buses. In the extended Ward model, they are connected to fictitious buses, as shown in figure 2. The internal model has typically tens, hundreds or several thousands of busses and covers transmission or distributions networks of utilities for one or more countries.

In order to determine a Ward equivalent, buses are grouped as internal, external and boundary buses, and admittances between these sets of buses are grouped as in the following network equations

$$\begin{bmatrix} \underline{i}_{int} \\ \underline{i}_{bb} \\ \underline{i}_{ext} \end{bmatrix} = \begin{bmatrix} \underline{Y}_{int} & \underline{Y}_{intbb} & 0 \\ \underline{Y}_{bbint} & \underline{Y}_{bb} & \underline{Y}_{bbext} \\ 0 & \underline{Y}_{extbb} & \underline{Y}_{ext} \end{bmatrix} \cdot \begin{bmatrix} \underline{u}_{int} \\ \underline{u}_{bb} \\ \underline{u}_{ext} \end{bmatrix} \qquad (1)$$

$$\underline{Y} = \begin{bmatrix} \underline{Y}_{int} & \underline{Y}_{intbb} & 0 \\ \underline{Y}_{bbint} & \underline{Y}_{bb} & \underline{Y}_{bbext} \\ 0 & \underline{Y}_{extbb} & \underline{Y}_{ext} \end{bmatrix} \qquad (2)$$

where, $\underline{Y}_{int}$ is a matrix of admittances interlinking internal buses, $\underline{Y}_{bb}$ is a matrix of admittances interlinking boundary buses, $\underline{Y}_{intbb}$ are admittances linking internal and boundary buses, $\underline{Y}_{bbext}$ are admittances between boundary and external buses, etc.

In the known Ward procedure, the last column and the last line are eliminated by multiplication of the last line with the expression in equation (3) and then addition to the second line. The change of the main-diagonal $\underline{Y}_{bb}$ is described by equation (4).

$$-\underline{Y}_{extbb} \cdot \underline{Y}_{ext}^{-1} \qquad (3)$$

$$\underline{Y}_{bb,red} = \underline{Y}_{bb} - \underline{Y}_{extbb} \cdot \underline{Y}_{ext}^{-1} \cdot \underline{Y}_{bbext} \qquad (4)$$

The result is a reduced nodal admittance matrix:

$$\underline{Y}_{red} = \begin{bmatrix} \underline{Y}_{int} & \underline{Y}_{intbb} \\ \underline{Y}_{bbint} & \underline{Y}_{bb,red} \end{bmatrix} \qquad (5)$$

According to the invention, the internal network is eliminated as well, i.e. the internal buses may not exist in the equations. The equations are therefore modified such that the nodal admittance matrix is just a reduced [2 x 2] nodal admittance matrix:

$$\underline{Y}_{red} = \underline{Y}_{bb,red} \qquad (6)$$

A new current vector can be calculated with the standard procedure as:

$$\underline{i}_{bb,red} = \underline{i}_{bb} - \underline{Y}_{bbext} \cdot \underline{Y}_{ext}^{-1} \cdot \underline{i}_{ext} \qquad (7)$$

This results in the representation of the reduced network as follows:

$$\begin{bmatrix} \underline{i}_{\text{int}} \\ \underline{i}_{bb,red} \end{bmatrix} = \begin{bmatrix} \underline{Y}_{\text{int}} & \underline{Y}_{\text{int}\,bb} \\ \underline{Y}_{bb\,\text{int}} & \underline{Y}_{bb,red} \end{bmatrix} \cdot \begin{bmatrix} \underline{u}_{\text{int}} \\ \underline{u}_{bb} \end{bmatrix} \tag{8}$$

In the modified version according to the invention, (8) is reduced to:

$$\underline{i}_{bb,red} = \underline{Y}_{bb,red} \cdot \underline{u}_{bb} \tag{9}$$

Now the power injections at the boundary buses can be computed from the new current vector:

$$\underline{S}_{bb} = \underline{U}_{bb} \cdot \underline{I}_{bb,red}^{\,*} = P_{bb} + j \cdot Q_{bb} \tag{10}$$

The complex fictitious admittances $Y_{13}$ and $Y_{24}$ and voltages $U_1$ and $U_2$ are determined according to the extended Ward procedure, as described in Deckmann et al, cited above.

The result of the above computations are parameters $Y_{30}$, $Y_{40}$, $Y_{34}$, $P_3$, $Q_3$, $P_4$, $Q_4$, of the basic Ward equivalent and additionally $Y_{13}$, $Y_{24}$ and $U_3$, $U_4$ for the extended Ward equivalent 6, as shown in figure 2. These equivalents describe the entire network seen from two points, i.e. from the boundary busses and only buses PQ3 and PQ4.

A planning procedure for a new or modified transmission section to be inserted in between the two buses can be applied on the base of the modified Ward or extended Ward equivalent. Data entry, analysis and simulation are much simplified, thanks to the simplicity of the equivalent. Experimental calculations have shown that the accuracy of results is surprisingly good, as compared with a complete, full-scale internal network model.

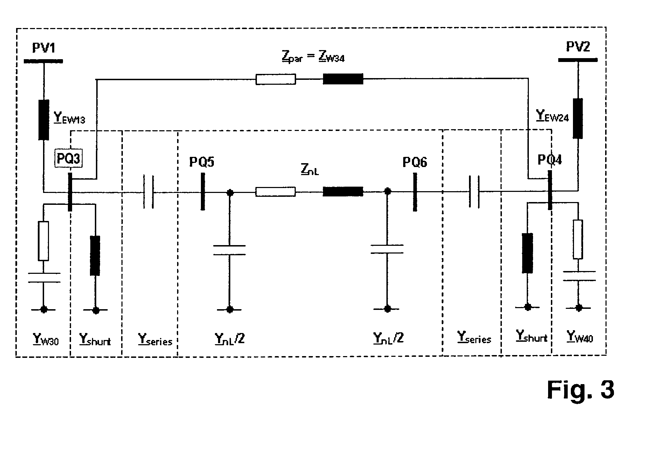

Figure 3 shows a new line from bus PQ5 to PQ6 with associated series compensation $\underline{Y}_{\text{series}}$ and shunt compensation $\underline{Y}_{\text{shunt}}$. The new line and compensation form a transmission section that is connected to the Ward equivalent circuit at the two network points PQ3, PQ4 for which the reduction has been performed. Other realizations of a transmission section can of course be connected the equivalent circuit, for example, a T-equivalent network, a number of parallel transmission lines, lines at different voltages, lines comprising transformers and/or existing compensation components etc. The Ward equivalent is represented by $\underline{Y}_{EW13}, \underline{Y}_{W30}, \underline{Z}_{W34}, \underline{Y}_{EW24}, \underline{Y}_{W40}$, along with injected voltages and power.

From the network of figure 3, the parameters of the new line and the compensation can be designed in a way that certain criteria are fulfilled, i.e. that the transmission section exhibits desired properties or performance criteria with respect to e.g. voltage level, angle deviation, minimum/maximum power flow, voltage increase in no load case etc. Therefore all commonly used planning criteria can be tested with the equivalent circuit according to the invention. For these purposes, the network representation of figure 3 is used in e.g. a load flow computation or a static or dynamic simulation or in a stability analysis method, using a computer representation suited to the planning or analysis method. The actual devices, i.e. line and compensation elements are, for the analysis, represented by line parameters $\underline{Z}_{nL}, \underline{Y}_{nL}$ and compensation parameters $\underline{Y}_{\text{series}}, \underline{Y}_{\text{shunt}}$.

In a preferred embodiment of the invention, the parameters of the equivalent circuit are determined by reading them from computer storage means. In another preferred embodiment of the invention, a user interface to a computer program that simulates and/or supports the design of a transmission section provides means for a user to enter the parameters of the basic or extended Ward model representing the network to which the transmission section is to be connected. The user interface is, for example, implemented as an ordinary local user interface or through a web page that is transmitted to a remote computer over a computer network, e.g. over the public internet based on the TCP/IP and http protocols. Input data is obtained by e.g. prompting a user for individual parameters or by presenting one or more web pages comprising text boxes to be filled in with parameter values. This allows a manufacturer or an engineering company providing power transmission solutions to obtain an equivalent representation for which a transmission line that satisfies given criteria is to be engineered. A user representing a network operating company is not required to divulge details of its power network that would be contained in a complete internal model as used according to the state of the art.

Two use cases are presented: The user may wish to obtain a design for a new transmission line or she may wish to add compensation elements to an existing line. In the first case, the user interface also presents a set of performance criteria to the user. The user specifies criteria of interest numerically and marks other criteria as irrelevant. The Ward equivalent parameters and the criteria are transmitted back to the provider, which determines transmission section elements and compensation elements such that the compensated transmission section exhibits the desired properties. This design process is done automatically, by an expert system or according to an algorithm, possibly assisted by a design engineer.

In the second case, the user interface, in addition to performance criteria, also provides means for inputting a representation of the existing transmission line, e.g. as parameters of a Pi- or T-equivalent. As in the first case, but constrained by the existing transmission line, the provider determines compensation elements to be added to the power transmission section such that the compensated transmission section exhibits the desired properties.

In both cases, in a preferred embodiment of the invention, the design process outputs a list and a structure of the compensation and/or transmission line elements, and a cost estimate for the new elements and/or a corresponding total cost for the upgrade of the network as designed.

List of designations

1    internal model
2    external model, Ward equivalent
3    boundary buses
4    fictitious generator buses
5    admittances to fictitious generator buses
6    Ward equivalent circuit

**Claims**

1.  A method for simulating an electrical power transmission network, where a computer representation of the network represents a power transmission section of the network linking a pair of buses, an internal network section (1) connected to said pair of buses and an external network section (2) comprising at least one adjoining network that is connected to the internal network section,
    **characterised in that** the method comprises the steps of

    •   determining parameters of a Ward equivalent circuit (6) representing a composite network section that comprises both the external (2) and the internal network section (1),
    •   analysing a behaviour of the Ward equivalent circuit (6) connected to a representation of the power transmission section.

2.  Method according to claim 1, wherein the step of determining the parameters of the Ward equivalent circuit (6) comprises presenting a user interface to a user and inputting data describing the parameters.

3.  Method according to claim 2, wherein the user interface is implemented as one or more web pages, and the method comprises the steps of

    •   transmitting the one or more web pages over an internet connection to a remote location, and
    •   accepting input data that describes the Ward equivalent circuit (6) and that is entered by a user and transmitted back from the remote location in response to the transmitted web page.

4.  Method according to claim 2 or 3, comprising the step of inputting, by means of the user interface, parameters that describe desired properties of the power transmission section.

5.  Method according to claim 4, comprising the step of inputting, by means of the user interface, parameters that describe a representation of the power transmission section ($\underline{Z}_{nL}$, $\underline{Y}_{nL}$).

6.  Method according to claim 5, comprising the step of determining compensation elements ($\underline{Y}_{series}$, $\underline{Y}_{shunt}$) to be added to the power transmission section such that the compensated transmission section exhibits the desired properties.

7.  Method according to claim 4, comprising the step of determining transmission section elements ($\underline{Z}_{nL}$, $\underline{Y}_{nL}$) and compensation elements ($\underline{Y}_{series}$, $\underline{Y}_{shunt}$) such that the compensated transmission section exhibits the desired properties.

8. Method according to claim 6 or 7, comprising the step of determining a cost estimate of the elements determined and communicating the cost estimate to a user.

9. Data processing system comprising means for carrying out the steps of the method according to any one of the claims 1 to 8.

10. A computer program for simulating an electrical power transmission network, where the computer program maintains a representation of the network, and said representation represents a power transmission section of the network linking a pair of buses, an internal network section connected to said pair of buses and an external network section comprising at least one adjoining network that is connected to the internal network section,
**characterised in that** a composite network section that comprises both the external and the internal network section is represented by a Ward equivalent circuit.

**Fig. 1**

**Fig. 2**

**Fig. 3**

**European Patent Office**

**EUROPEAN SEARCH REPORT**

Application Number

EP 02 40 5878

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | LO K L ET AL: "Hybrid approach using counterpropagation neural network for power-system network reduction" IEE PROCEEDINGS: GENERATION, TRANSMISSION AND DISTRIBUTION, INSTITUTION OF ELECTRICAL ENGINEERS, GB, vol. 144, no. 2, 21 March 1997 (1997-03-21), pages 169-174, XP006008675 ISSN: 1350-2360 * the whole document * --- | 1,9,10 | H02J3/00 |
| A | ASSADIAN M ET AL: "FIELD OPERATIONAL EXPERIENCES WITH ON LINE STATE ESTIMATOR" IEEE TRANSACTIONS ON POWER SYSTEMS, IEEE INC. NEW YORK, US, vol. 9, no. 1, 1 February 1994 (1994-02-01), pages 50-58, XP000465675 ISSN: 0885-8950 * the whole document * ----- | | |

TECHNICAL FIELDS SEARCHED (Int.Cl.7)

H02J

The present search report has been drawn up for all claims

| Place of search | Date of completion of the search | Examiner |
|---|---|---|
| MUNICH | 10 September 2003 | Calarasanu, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)